# EUROPEAN PATENT APPLICATION

(11) **EP 3 305 410 A1**
(43) Date of publication of application: **11.04.2018**
(21) Application number: 17195430.8
(22) Date of filing: 09.10.2017
(51) Int. Cl.: B03B 9/06, B07B 4/02, B07B 13/00, B07C 7/00, B03C 1/00

(54) **MOBILE PICKING STATION**

(30) Priority: 10.10.2016 GB 201617169
(71) Applicant: M & K Holdings (Ireland) Limited, Dungannon, County Tyrone BT70 2PD (GB)
(72) Inventor: RAFFERTY, Nigel, Dungannon, County Tyrone BT702PD (GB); RAFFERTY, Desmond, Dungannon, County Tyrone BT702PD (GB)
(74) Representative: FRKelly

(57) **Abstract**

A mobile picking system for sorting a plurality of materials comprising a support frame upon which a conveyor arrangement is mounted, wherein said conveyor arrangement is configured to convey the materials from one end of the support frame to the opposing end and wherein at least one picking station is provided upon the support frame adjacent said conveyor arrangement and wherein the support frame is variable between a working configuration and a transporting configuration by a plurality of support legs which are coupled to the support frame and the conveyor arrangement comprises a picking conveyor and a feed system.

## Description

### Field of the Invention

This invention relates to a self-contained mobile picking system and in particular to a self-contained mobile picking system incorporating a feed system, which is variable between a working configuration and a transporting configuration.

### Background to the Invention

It is known to use mobile picking systems in recycling applications to sort various types of waste material such as aggregate, plastics or metal. However a disadvantage of known devices is that they do not include an integrated feed system, relying therefore on an external feed system to provide for a consistent and regulated feed. The external feed system is more often than not another piece of recycling machinery such as a stand alone feed system or an excavator. Feeding the known devices with another piece of recycling machinery renders the known devices as not truly 'self-contained' and makes transporting such system more difficult. Known devices can be fed with an excavator, but the method of feeding known devices with an excavator is inefficient, requiring the excavator operator to employ a 'drip feed' methodology to the known devices. 'Drip feeding' is a process whereby an excavator operator attempts to regulate downstream operations by slowly releasing the contents of a bucket or grab. This type of operation is difficult, inconsistent and inefficient in several ways namely; Drip feeding doesn't provide for a consistent feed i.e., feed level can be erratic, either too little or too much, thereby causing undue stress on the manual operatives working on the downstream picking line or exceeding the maximum capacity of the automated downstream machinery (integrated or otherwise) and can result in contamination of the recycled products. Furthermore drip feeding' provides for an inefficient use of the excavator and the excavator operator as the capability of the excavator itself is being underutilised. Feeding the known mobile picking system with other separate pieces of recycling machinery renders these devices as not truly 'self-contained'.

The present invention provides an efficient and functional self-contained mobile picking system incorporating a feed system, which may be easily transported.

### Summary of the Invention

Accordingly the present invention provides a mobile picking system for sorting a plurality of materials comprising, a support frame upon which a conveyor arrangement is mounted; wherein said conveyor arrangement is configured to convey said materials from one end of said support frame to the opposing end and wherein at least one picking station is provided upon said support frame adjacent said conveyor arrangement, and wherein said support frame is variable between a working configuration and a transporting configuration by a plurality of support legs coupled to said support frame and wherein said conveyor arrangement comprises a picking conveyor and a feed system.

Preferably, said feed system and picking conveyor are mounted sequentially upon the support frame such that material deposited upon the feed system is carried to said picking conveyor.

Ideally, said feed system is typically mounted upon the support frame at a greater height than at least part of the picking conveyor.

Preferably, said feed system is mounted upon the support frame such that it is obliquely disposed with respect to the ground surface on which the system rests.

Ideally, said feed system is pivotably mounted upon said support frame.

Preferably, said feed system comprises a belt conveyor, or a vibrating feed system or an apron feed system or any other suitable type of feed system or arrangement.

Ideally, one or more support structures are coupled to the support frame.

Preferably, said support structures may comprise a covered unit and/or one or more platforms or walkways.

Optionally, said support frame extends, at least in part, through the support structure which is coupled to said support frame.

Ideally, said picking conveyor is provided upon the support frame such that it extends from the feed system and through said support structure.

Preferably, said picking conveyor comprises a belt conveyor.

Ideally, said support legs are coupled either side of the support frame.

Preferably, said support legs comprise a plurality of hydraulic rams preferably a plurality of telescopic hydraulic rams.

Ideally, said hydraulic rams are extendable in a substantially longitudinal direction.

Preferably, said support legs are configured to lock in a plurality of extended positions.

Ideally, a coupling arrangement is provided on said support frame which is configured to couple to a vehicle.

Preferably, said coupling arrangement comprises a fifth wheel coupling.

Ideally, said support frame comprises a wheeled chassis.

Preferably, said picking station comprises a manual picking station and/or a material separation means.

Ideally, the one or more material separation means are provided on said support frame which are configured to separate the material as it is carried on the conveyor arrangement.

Preferably, said material separation means comprises air separation means.

Ideally, said air separation means is positioned upon said support frame such that is configured to separate material as it falls from the feed system to the picking conveyor in-use.

Preferably, wherein the air separation means is disposed upon the support system between the feed system and the picking conveyor, wherein the feed system is disposed at a greater height relative to the picking conveyor such that the air separation means is configured to direct an airflow towards the material as it falls off of the feed system and onto the picking conveyor in-use.

Ideally, said material separation means comprises magnetic separation means.

Preferably, said magnetic separation means is positioned upon said support frame such that it is configured to separate materials before it falls off the opposing end of the picking conveyor in-use.

Ideally, said support structure incorporates a plurality of chutes.

Preferably, said chutes are disposed on the floor and/or walls of the support structure.

Ideally, a power supply is provided on the support frame which is configured to supply power to the mobile picking system.

Optionally, said power supply comprises an electrical and/or hydraulic power supply.

Ideally, said support frame comprises an elongate frame having first and second portions which are joined by an angled portion.

Preferably, said first and second portions extend substantially parallel relative to one another, wherein said angled portion is obliquely disposed therebetween.

Ideally, said angled portion extends downwardly from the first portion towards the second portion at an angle of 20°.

### Brief Description of the Drawings

The invention will now be described by way of example only with reference to the accompanying drawings in which like numerals are used to denote like parts and in which:
Figure 1 shows a top plan view of a mobile picking system in a working configuration;
Figure 2 shows an end view of the mobile picking system in the working configuration;
Figure 3 shows a side view of the mobile picking system in the working configuration;
Figure 4 shows a side view of the mobile picking system in a transporting configuration;
Figure 5 shows a top plan view of the mobile picking system in the transporting configuration;
Figure 6 is an end view of the mobile picking system in the transporting configuration;
Figure 7 is a side view of the mobile picking system in the working configuration showing the positioning of a material separation means thereon;
Figure 8 is an enlarged section of Figure 7 showing the positioning of the material separation means;
Figure 9 shows a top plan view of the mobile picking system and in particular the positioning of the material separation means thereon;
Figure 10 is an enlarged section of Figure 9 showing the positioning of the material separation means upon the mobile picking system.

### Detailed Description of the Drawings

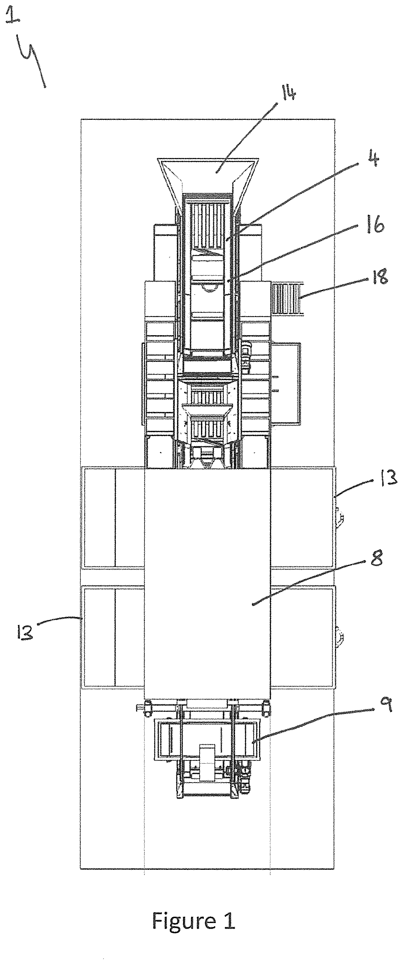

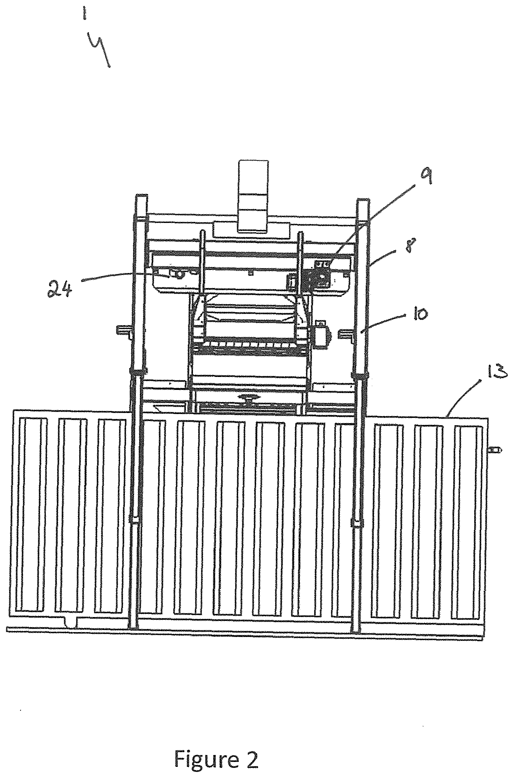

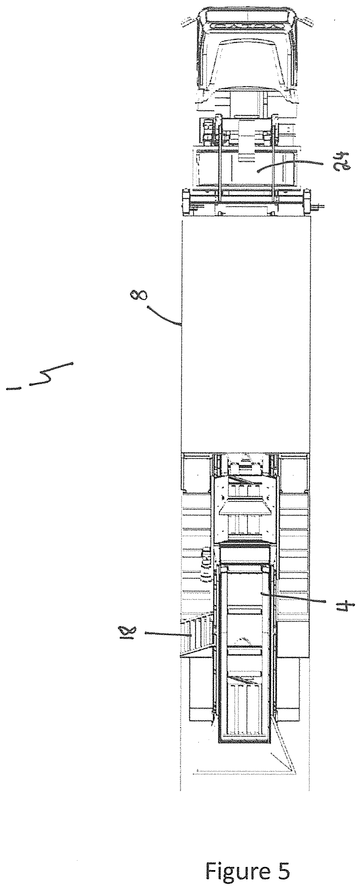

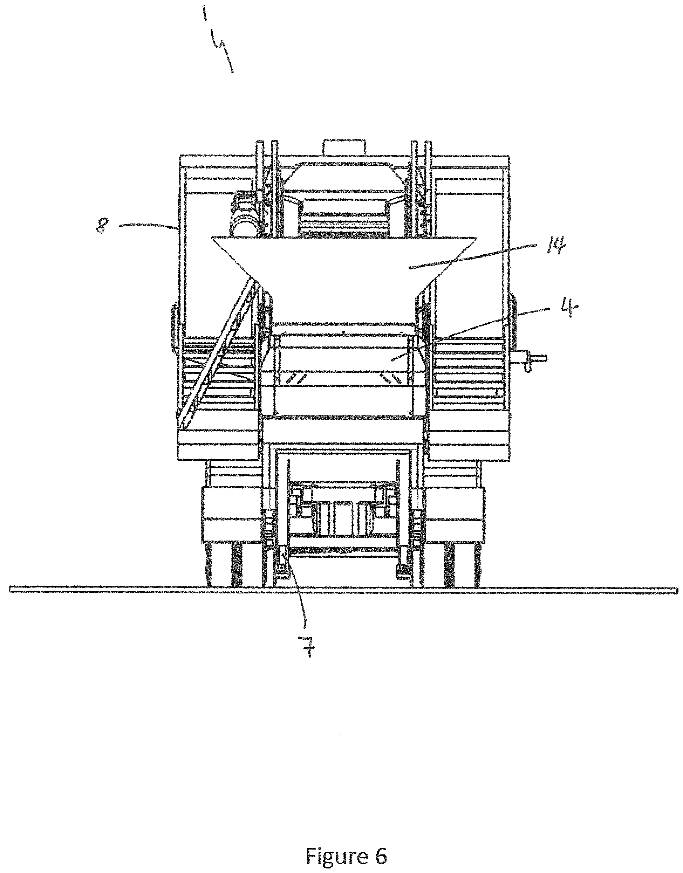

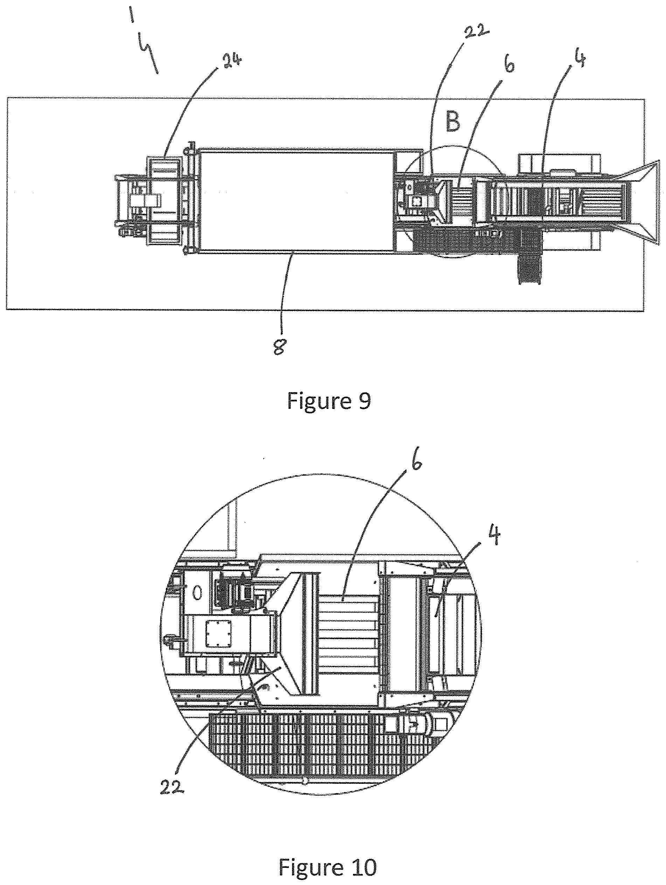

Referring now to Figures 1 to 10 of the drawings there is shown, generally indicated by the reference numeral 1, a mobile picking system for sorting a plurality of materials. The materials being sorted typically comprise waste construction materials or demolition waste or any such waste which has various useful materials such as metals, plastics, glass and/or masonry intermixed. The mobile picking system 1 comprises a support frame 2 upon which a conveyor arrangement 3 is mounted. The support structure 8 is configured to provide means such that the material carried on the conveyor arrangement 3 may be sorted, to this end at least one picking station 19 is provided upon the support frame 2. The picking station 19 may comprise a manual picking station (not shown) comprising one or more locations upon the support frame 2 at which one or more operators may be positioned, adjacent the conveyor arrangement 3, such that they may selectively separate the material in-use. Alternatively or additionally the picking stations 19 may comprise a plurality of material separation means 9 which are configured to automatically separate the material as it is carried on the conveyor arrangement 3. In a preferred embodiment the support structure 2 comprises both material separation means 9 and the operator defined picking stations.

Optionally one or more support structures 8 may be coupled, preferably releasably so, upon the support frame 2. The support structure 8 may comprise a covered unit (as shown in Figures 1 to 10) or one or more platforms or walk ways (not shown). Where the support structure comprises a covered unit the support frame 2 may extend, at least in part, there through. Furthermore, the conveyor arrangement 3 or at least a part thereof, may also extend through the structure 8. The conveyor arrangement 3 is configured to carry the materials from one end of the support frame 2 to the opposing end. Where the support structure 8 comprises a covered unit the conveyor arrangement 3 may extend through the support structure 8 such that the materials may be sorted therein and to this end at least one manual picking station 19 is preferably provided within the structure 8, typically disposed either side of the conveyor arrangement 3. Where the support structure comprises one or more platforms, these may be coupled upon either side of the support frame 2, typically upon either side of the conveyor arrangement 3 such that one or more manual picking stations 19 may be provided alongside at least part of the conveyor arrangement 3. Where the picking station comprises the material separation means 9 these may be provided adjacent the conveyor arrangement 3, where adjacent is to be understood to comprise, above and/or to either or both sides of the conveyor arrangement 3.

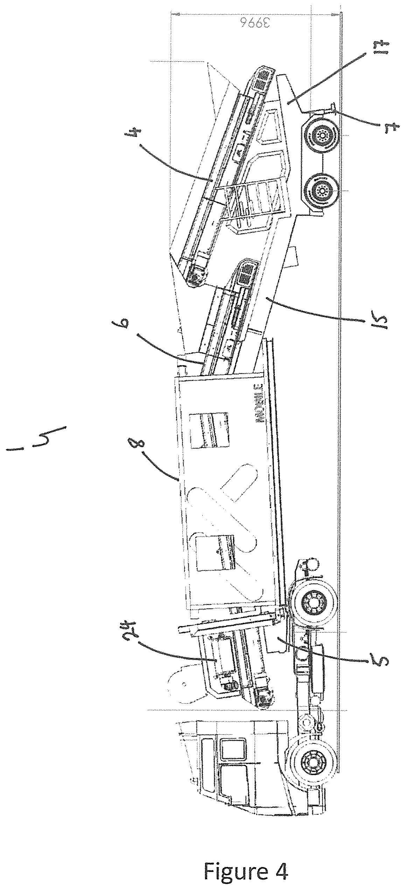

The support frame 2 is variable between a working configuration (as shown in figures 1 to 3) and a transporting configuration (as shown in figures 4 to 6). The support frame 2 is varied between the working and transporting configuration by a plurality of support legs 10. The support legs 10 are ideally coupled to the support frame 2. Alternatively the support legs 10 may be coupled to the support structure 8. The support legs 10 preferably comprise hydraulic rams, more preferably telescopic hydraulic rams. The hydraulic rams typically extend along a substantially longitudinal axis where the longitudinal axis is to be understood as extending perpendicular to the ground surface upon which the mobile picking system 1 rests in-use. Preferably, the support legs 10 are configured to lock in a plurality of extended or retracted positions. In an alternative embodiment the support legs 10 may comprise foldable legs or any other suitable leg extension arrangement which is operable by manual actuation. Alternatively the support legs 10 may be configured such that the system 1 is lifted off of the ground upon which it rests, such as where it is coupled to a crane for example, the support legs 10 are configured to extend due to gravity, whereupon when extended they are lockable in an extended position.

In the transporting configuration (as shown in figures 4 to 6) the system 1 may be releasably coupled to a vehicle (as shown in figures 4 to 6) by a coupling arrangement 5 which is typically provided on the support frame 2 and which is co-operable with a corresponding arrangement provided on the vehicle. The coupling arrangement 5 typically comprises a fifth wheel coupling however it may alternatively comprise any suitable pivoting coupling arrangement. Furthermore the support frame 2 typically comprises a wheeled chassis, which is arranged such that the mobile picking system 1 may be easily transported by the vehicle when coupled in-use. Preferably the wheels of the chassis are disposed upon either side, at one end thereof, alternatively however the wheels may be disposed at any location relative to the chassis, provided that they adequately support the chassis in-use. Wheeled should be understood to comprise tracks and/or wheels and/or any other suitable arrangement. In an alternative embodiment (not shown) in the transporting configuration the system 1 may be configured such that it is insertable within a container, such as a shipping container. To this end the system may comprise a non-wheeled chassis or the wheels and/or tracks may be removable from the wheeled chassis described previously.

Referring now to Figures 1 to 3 of the drawings where the mobile picking system 1 is shown in the working configuration. In the working configuration the support frame 2 is held in an elevated position via the support legs 10 which are preferably configured to extend in-use. Reciprocally as the support frame 2 is extended into the elevated position via the support legs 10 so to is the support structure 8 which is coupled thereon. The support legs 10 are typically coupled either side of the support frame Alternatively where the support legs 10 are coupled to the support structure 8, preferably to the base of the structure 8, or alternatively upon either side thereof, the longitudinal displacement of the supports legs 10 coupled to the support structure 8 causes a reciprocal displacement of the support frame 2 to which the structure 8 is coupled, such as to vary the system 1 from the transporting to the working configuration. Advantageously, as the support structure 8 is held in an elevated position in the working configuration at least one container 13 may be inserted underneath at least part of the support frame 2.

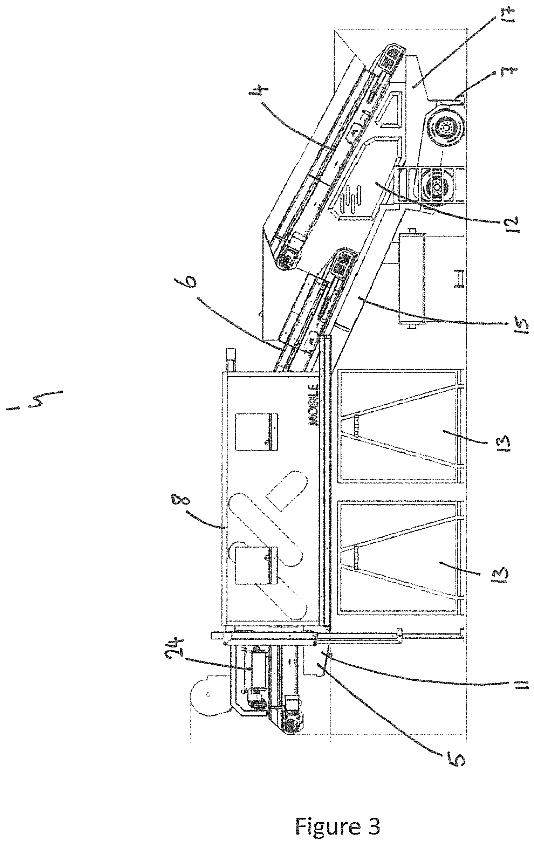

The support frame 2 typically comprises an elongate frame having first and second portions 11, 17 which are joined by an angled portion 15 as shown in figures 1 to 10. The angled portion 15 typically extends between the first and second portions 11, 17 with the first and second portions 11, 17 typically extending substantially parallel relative to each other. Preferably, the angled portion slopes downwardly from the first portion 11 to the second portion 17, typically at an angle of 20° however it may alternatively extend at any suitable angle. In an alternative embodiment, not shown, the support frame 2 may comprise a single planar portion. In the working configuration, as shown in Figure 3, the first portion 11 is located at a greater height relative to the second portion 17 with the angled portion 15 extending downwards from the first portion 11 towards the second portion 17. The support frame 2 further incorporates at least one abutment 7 which is configured to support the frame 2 when in the working configuration. The abutment 7 is provided on the underside of the support frame 2, preferably upon the underside of the second portion 17. The abutment 7 is arranged such that when the mobile picking system 1 is in the transporting configuration it does not contact the ground surface on which the system 1 rests. Advantageously when the system 1 is in the transporting configuration and where it is coupled to a vehicle in-use the abutment 7 does not contact the ground surface when the vehicle moving as shown in Figure 4. However when the system 1 is in the working configuration the abutment 7 is configured to contact the ground surface. In-use as the system 1 is varied between the transporting configuration and the working configuration the abutment 7 is located such that the pivoting movement of the support frame 2 with respect to the ground surface affected via the support legs 10 causes the abutment to contact the ground surface thereby supporting the system 1 in the working configuration. The abutment 7 typically comprises a limb which extends from the base of the support frame 2, typically from the second portion 17. Preferably the abutment 7 is located at the first end of the second portion 17.

The conveyor arrangement 3 typically comprises a feed system 4 and a picking conveyor 6. The feed system 4 and picking conveyor 6 are mounted sequentially upon the support frame 2 such that material deposited upon the feed system 4 is carried to the picking conveyor 6 in-use. The feed system 4 is mounted upon a first end of the support frame 2, typically upon the second portion 17, whilst the picking conveyor 6 is mounted sequentially upon the support frame 2 such that material deposited upon the feed system 4 at a first end is carried to the conveyor 6 in-use. To this end the feed system 4 is typically mounted upon the support frame 2 at a greater height than the picking conveyor 6 such that material carried upon the feed system 4 falls off a second end of the feed system 4 onto the picking conveyor 6 which is located, at least in part, thereunder. Advantageously, as the feed system 4 is mounted at a greater height relative to the picking conveyor 6, the material being carried by the feed system is dispersed when it falls and impacts on the picking conveyor 6. Further advantageously the speed of the feed system 4 is variable such that a consistent and regulated feed of material may be provided to the picking conveyor 6. Alternatively the feed system 4 may be pivotably mounted upon the support frame 2 such that the incline of the feed system 4 relative to the support frame 2 may be varied. Advantageously by providing the feed system 4 and picking conveyor 6 integrally upon the support frame 2 no stand alone feed system is required enabling rapid deployment and operation of the system 1 in-use.

The feed system 4 is typically mounted upon the support frame 2 such that it is obliquely disposed with respect to the ground surface on which the system 1 rests in the working configuration in-use. However alternatively the feed system may be mounted upon the support frame 2 such that it extends substantially parallel to the ground surface on which the system 1 rests in the working configuration in-use. The feed system 4 typically comprises a conveyor such as a belt conveyor. The belt conveyor comprises a continuous belt extending between a plurality of drums, typically two drums. Alternatively the feed system 4 may comprise a vibrating feed system which incorporates a vibrating bed such that material deposited thereon is spread out due to the vibratory motion or the feed system 4 may comprise an apron feed system or any other suitable feed system. In a preferred embodiment the feed system 4 may comprise a downwardly inclined hopper mounted on the support frame 2, typically via resilient mounts. A funnel 14 is ideally disposed at one end of the feed system 4, typically upon the first end, which is configured to direct material onto the feed system 4. Preferably the funnel 14 is substantially frusto pyramidal in shape; with corresponding inclined interior walls. Alternatively the funnel 14 may comprise any other suitable shape. Furthermore the feed system 4 is typically bounded by a plurality of side walls 16, which are ideally slanted such as to further ensure that material deposited is guided thereon.

The picking conveyor 6 is provided upon the support frame 2 such that it extends from the feed system 4 to the opposing end of the support frame 2. To this end in a preferred embodiment the picking conveyor 6 is mounted upon the angled and first portions 15, 11 of the support frame 2.

Where the support structure 8 comprises a covered item the picking conveyor 6 is further arranged to extend, at least in part, through the support structure 8, typically through one or more apertures provided on the support structure 8. Alternatively where the support structure 8 comprises one or more platforms or walkways the picking conveyor 6 is arranged such as to extend adjacent to these. The picking conveyor ideally comprises a belt conveyor. The one or more manual picking stations 19 (not shown) may be disposed either side of the picking conveyor 6 upon the support structure 8, to this end one or more ladders or stairs or other climbable platforms 18 are typically provided on the support frame 2. The picking stations 19 are configured to allow an operator to select certain recoverable materials, such as recyclates or contaminating products, from the picking conveyor 6 and to this end the support structure 8 typically incorporates a plurality of chutes 20 which are typically disposed on the floor and/or walls of the support structure 8 and through which an operator working at the one or more manual picking stations 19 may selectively deposit material picked off of the picking conveyor 6. Advantageously as the support frame 2 is held in an elevated position in the working configuration (as shown in figure 3) any material deposited in the chutes 20 may fall into the one or more containers 13 provided thereunder. Preferably a plurality of chutes 20 are provided at each manual picking station 19 typically corresponding to the number of containers 13 located under the support structure 8. The picking conveyor 6 is further arranged such that it extends beyond or through the support structure 8 such that any material which hasn't been removed from the picking conveyor 6 falls off the end of the picking conveyor 6. An additional container 13 may be provided to receive this unpicked material or alternatively it may just fall onto the ground.

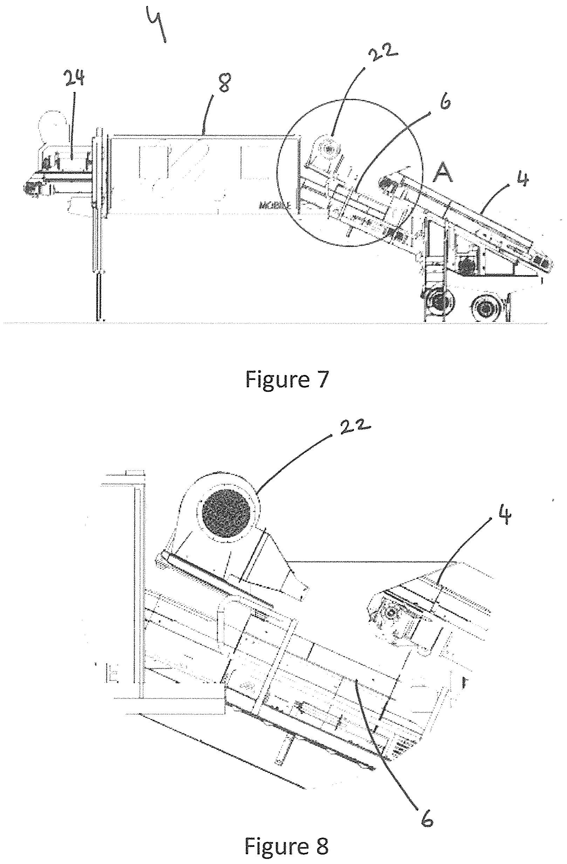

The support frame 2 typically comprises a plurality of material separation means 9 which are configured to automatically separate the material as it is carried on the conveyor arrangement 3 from one end of the support frame 2 to the other. The material separation means 9 may comprise an air separation means 22, as shown in Figures 8 to 10, which is configured to, either, direct airflow towards the material or suck air in towards the air separation means 22. Advantageously the air separation means separates the material carried upon at least one of the conveyor arrangement 3 or feed system 4, by removing light fraction such as paper, wood or plastic from heavier materials such as metals or stone whilst also removing particulate such as dust, grit or sand from the material before it is sorted. The air separation means 22 typically comprises a blower which has a nozzle coupled thereto which is operable to direct the airflow from the blower. Alternatively the material separation means 9 may comprise a magnetic separation means 24 which is configured to separate metallic elements from the material as it passes thereunder and/or on the conveyor arrangement 3. The magnetic separation means 24 typically comprises a magnet which is preferably located above the conveyor arrangement 3 such that any metallic elements, which are magnetic, which pass thereunder are attracted to the magnet and picked or lifted from the material as it is carried on the conveyor arrangement 3. Alternatively the conveyor arrangement 3, more preferably the picking conveyor 6 may incorporate the magnetic separation means 24 for example the magnetic separation means may comprise a drum magnet (not shown) which comprise a section or a drum of the picking conveyor 6.

In a preferred embodiment (as shown in Figure 3) the mobile picking system 1 typically incorporates a combination of air and magnetic separation means 22, 24. A first air separation means 22 is typically provided upon the feed system 4 is configured to separate the material as it falls off the feed system 4 onto the picking conveyor 6. As shown in figures 7 to 10, a first air separation means 22 is typically provided upon the feed system 4 and is configured to separate the material as it falls off the feed system 4 onto the picking conveyor 6. To this end the air separation means 22 is typically disposed upon the support frame between the feed system 4 and the picking conveyor 6 such that it may direct an airflow towards the material as it falls off of the feed system 4, the end thereof, and onto the picking conveyor 6, the feed system 4 being disposed at a greater height relative to the picking conveyor 6. Alternatively the air separation means 22 of this embodiment may comprise a magnetic separation means or any other suitable material separation means which is operable to separate the material as it falls from the feed system 4 to the picking conveyor. Advantageously, by separating the material as it falls from the feed system 4 to the picking conveyor the separating effectiveness is enhanced, particularly with regard to removing particulate and light materials. Advantageously, this ensures that any particulate which the material may have on its surface is removed so that recoverable materials may be easier determined by the operators at the one or more picking stations 19. A magnetic separation means 24 is provided above the conveyor arrangement 3 coupled to the support frame 2, typically above the picking conveyor 6 and is configured to separate metal from the materials. An additional air separation means 22 may also be provided above the picking conveyor 6, typically above the opposing end of the picking conveyor 6. One or more additional air or magnetic separation means 22, 24 may be provided along the conveyor arrangement 3. Advantageously the combination of the one or more material separation means 9 with the manual picking stations 19 provided upon the support structure 8 ensures that the material carried on the conveyor arrangement 3 may be sorted quickly and efficiently.

A power supply 12 is provided on the support frame 2 which is configured to supply power to the mobile picking system 1. The power supply 12 typically comprises an electrical and/or hydraulic power supply such as an electrical generator and/or a hydraulic power pack or any other suitable power supply. The power supply 12 may be operated remotely using a remote control or alternatively it may be operated directly via a switch located thereon. In a preferred embodiment the power supply 12 comprises an electrical power supply coupled to a hydraulic power pack. The power supply 12 may be provided in a recessed receptacle provided on the support frame 2, the receptacle may have one or more access doors coupled thereon. In an alternative embodiment the system 1 may be electrically coupled to a mains supply of power or an external generator or any other suitable means of supplying electrical power.

In-use the mobile picking system 1 in the transporting configuration may be towed into position by the vehicle facilitated by the coupling arrangement 5 and the frame 2 comprising the wheeled chassis whereupon the vehicle can then be uncoupled from the system 1. The support legs 10 may then be extended such as to elevate the system 1 into the working configuration (as shown in figures 1 to 3). One or more containers 13 may then be positioned underneath the support frame 2. Upon actuation, with power supplied by the power supply 12, the conveyor arrangement 3 will begin displacement, whereupon material to be sorted may be deposited upon the feed system 4. The feed system 4 is typically configured to separate out the material thereon via vibratory motion, once the material is carried to the opposing end of the feed system 4 it will fall off onto the picking conveyor 6. Advantageously, the speed of the feed system 4 is variable so that material fed to the picking conveyor 6 may be done so at a speed suitable for the one or more operators, provided at the manual picking station(s) 19 to sort the material further along in the system. The air separation means 22 is configured to separate the material as it falls from the feed system 4 onto the picking conveyor 6.

Upon being deposited on the picking conveyor 6 the material will then be carried along through or alongside the support structure 8 where the one or more operators provided at the plurality of manual picking stations 19 may selectively pick the material to remove or recover specific elements. These elements can then be deposited into corresponding chutes 20 provided on the floor and/or walls of the support structure 8 where they will then fall into the containers 13 located underneath. Any of the material still remaining on the picking conveyor 6 will pass underneath the magnetic separation means 24, whereupon any metal may be removed therefrom as well as typically passing under another air separation means 22. Following this any remaining material on the picking conveyor 6 will fall off the end onto the ground or into another container 13. To revert back to the transporting configuration the containers 13 are removed from underneath and the support legs 10 are retracted such that the mobile picking system 1 may be coupled to the vehicle for transportation in-use.

The invention is not limited to the embodiment(s) described herein but can be amended or modified without departing from the scope of the present invention.

## Claims

1. A mobile picking system for sorting a plurality of materials comprising:
a. a support frame upon which a conveyor arrangement is mounted;
b. wherein said conveyor arrangement is configured to convey said materials from one end of said support frame to the opposing end and wherein at least one picking station is provided upon said support frame adjacent said conveyor arrangement; and;
c. Wherein said support frame is variable between a working configuration and a transporting configuration by a plurality of support legs coupled to said support frame; and
d. Wherein said conveyor arrangement comprises a picking conveyor and a feed system.

2. The system as claimed in claim 1, wherein said feed system and picking conveyor are mounted sequentially upon the support frame such that material deposited upon the feed system is carried to said picking conveyor, and/or wherein said feed system is typically mounted upon the support frame at a greater height than at least part of the picking conveyor, and/or wherein said feed system is mounted upon the support frame such that it is obliquely disposed with respect to the ground surface on which the system rests, and/or wherein said feed system is pivotably mounted upon said support frame, and/or, wherein said feed system comprises a belt conveyor, or a vibrating feed system or an apron feed system or any other suitable type of feed system or arrangement.

3. The system as claimed in any preceding claim, wherein one or more support structures are coupled to the support frame, wherein said support structures may comprise a covered unit and/or one or more platforms or walkways.

4. The system as claimed in any preceding claim, wherein said support frame extends, at least in part, through the support structure which is coupled to said support frame and/or wherein said picking conveyor is provided upon the support frame such that it extends from the feed system and through said structure, and/or wherein said picking conveyor comprises a belt conveyor.

5. The system as claimed in claim 1, wherein said support legs are coupled either side of the support frame and wherein said support legs preferably comprise a plurality of hydraulic rams, preferably a plurality of telescopic hydraulic rams, that are preferably extendable in a substantially longitudinal direction, and wherein said support legs may be configured to lock in a plurality of extended positions.

6. The system as claimed in any preceding claim, wherein a coupling arrangement, such as a fifth wheel coupling, is provided on said support frame which is configured to couple to a vehicle.

7. The system as claimed in any preceding claim, wherein said support frame comprises a wheeled chassis.

8. The system as claimed in claim 1, wherein said picking station comprises a manual picking station and/or a material separation means.

9. The system as claimed claim 8, wherein the one or more material separation means are provided on said support frame which are configured to separate the material as it is carried on the conveyor arrangement.

10. The system as claimed in claim 9, wherein said material separation means comprises air separation means which is preferably positioned upon said support frame such that is configured to separate material as it falls from the feed system to the picking conveyor in-use.

11. The system as claimed in claim 10, wherein said material separation means comprises magnetic separation means that is preferably positioned upon said support frame such that it is configured to separate materials before it falls off the opposing end of the picking conveyor in-use.

12. The system as claimed in any preceding claim, wherein said support structure incorporates a plurality of chutes that are preferably disposed on the floor and/or walls of the support structure.

13. The system as claimed in any preceding claim, wherein a power supply, such as an electrical and/or hydraulic power supply, is provided on the support frame which is configured to supply power to the mobile picking system.

14. The system as claimed in any proceeding claim, wherein said support frame comprises an elongate frame having first and second portions which are joined by an angled portion.

15. The system as claimed in claim 29, wherein said first and second portions extend substantially parallel relative to one another, wherein said angled portion is obliquely disposed therebetween, wherein preferably said angled portion extends downwardly from the first portion towards the second portion at an angle of 20°.
